# EUROPÄISCHE PATENTSCHRIFT

(11) **EP 3 769 045 B1**
(45) Veröffentlichungstag und Bekanntmachung des Hinweises auf die Patenterteilung: **13.09.2023**
(21) Anmeldenummer: 19715383.6
(22) Anmeldetag: 19.03.2019
(51) Int. Cl.: G01C 25/00, B60R 1/00, G06T 7/80, G01C 11/00, B60R 11/04

(54) **VERFAHREN ZUR BESTIMMUNG DER LAGE UND ORIENTIERUNG DES KOORDINATENSYSTEMS WENIGSTENS EINER KAMERA IN EINEM FAHRZEUG RELATIV ZU DEM KOORDINATENSYSTEM DES FAHRZEUGS**
METHOD FOR DETERMINING THE POSITION AND ORIENTATION OF THE COORDINATES SYSTEM OF AT LEAST ONE CAMERA IN A VEHICLE RELATIVE TO THE COORDINATES SYSTEM OF THE VEHICLE
PROCÉDÉ SERVANT À DÉFINIR LA POSITION ET L'ORIENTATION DU SYSTÈME DE COORDONNÉES D'AU MOINS UNE CAMÉRA DANS UN VÉHICULE PAR RAPPORT AU SYSTÈME DE COORDONNÉES DU VÉHICULE

(30) Priorität: 20.03.2018 DE 102018106464
(43) Veröffentlichungstag der Anmeldung: 27.01.2021
(73) Patentinhaber: Dürr Assembly Products GmbH, 66346 Püttlingen (DE)
(72) Erfinder: TENTRUP, Thomas, 66663 Merzig-Mechern (DE); PFEIL, Holger-Thorsten, 66292 Riegelsberg (DE)
(74) Vertreter: Patentanwaltskanzlei Vièl & Wieske PartGmbB
(86) Internationale Anmeldenummer: PCT/DE2019/100257
(87) Internationale Veröffentlichungsnummer: WO 2019/179575

(56) Entgegenhaltungen:
- DE-A1-102009 001 742
- DE-A1-102010 062 696
- DE-A1-102015 112 368
- US-A1- 2015 341 629

## Beschreibung

Die vorliegende Erfindung betrifft ein Verfahren zur Bestimmung der Lage und Orientierung des Koordinatensystems wenigstens einer Kamera in einem Fahrzeug relativ zu einem Koordinatensystem des Fahrzeugs gemäß Anspruch 1.

Kameras in Fahrzeugen werden verwendet als Sensorik von Fahrerassistenzsystemen (FAS). Zu diesen FAS-Systemen gehört beispielsweise der Spurhalteassistent. Der Spurhalteassistent überwacht, ob das Fahrzeug sich in der Spur zwischen zwei Linien auf der Straße befindet und gibt dem Fahrer einen Hinweis, wenn er diese Linien überfährt, ohne einen Blinker gesetzt zu haben. Mittels dieser Kameras als FAS-Sensorik wird die Umgebung des Fahrzeugs erfasst. Diese Erfassung kann in Fahrtrichtung des Fahrzeugs nach vorne, seitlich oder auch nach hinten erfolgen. Mit diesen Kameras müssen Objekte beispielsweise andere Fahrzeuge oder Fußgänger nach ihrer Klassifizierung exakt lokalisiert und der zeitliche Verlauf ihrer Bewegung (Trajektorie) aus der Bestimmung der momentanen Geschwindigkeit abgeleitet werden. In diesem Zusammenhang ist wichtig, dass die von der Kamera detektierte Objektlage in Bezug zum Fahrzeug-Koordinatensystem möglichst exakt bestimmt werden kann. Hierzu muss das Kamera-Koordinatensystem hochgenau zum Fahrzeug-Koordinatensystem ausgerichtet werden.

In diesem Zusammenhang ist der Anmelderin bekannt, in einem Prüfstand des Fahrzeugs eine Erfassung der Orientierung des Fahrzeugs bezogen auf ein dem Prüfstand zugeordnetes Koordinatensystem (Prüfstand-Koordinatensystem) vorzunehmen. Außerdem wird hierbei eine Bilddarstellung bezogen auf dieses dem Prüfstand zugeordnete Koordinatensystem dargestellt. Das bedeutet, dass die Bilddarstellung insbesondere hinsichtlich Ihrer Orientierung auf das dem Prüfstand zugeordnete Koordinatensystem ausgerichtet wird. Die Bilddarstellung weist verschiedene Musterelemente auf wie beispielsweise Rechtecke und Kreise, die hinsichtlich ihrer Größe, ihrer Position und ihres Abstandes in der Bilddarstellung exakt mit sehr geringen Toleranzen definiert sind. Die von der Kamera des Fahrzeugs erfassten Musterelemente der Bilddarstellung, z.B. Rechtecke und Kreise, werden hinsichtlich ihrer Lage und Kantenlängen bzw. Radien vermessen. Mit Hilfe der ursprünglichen Maßhaltigkeit der Musterelemente und unter Berücksichtigung der erfassten Orientierung des Fahrzeugs in dem Prüfstand wird das Kamera-Koordinatensystem relativ zum Fahrzeug-Koordinatensystem bestimmt.

Für die beschriebenen Kameras zur Verwendung in den genannten FAS-Systemen wird das Kamera-Koordinatensystem auf die geometrische Fahrachse des Fahrzeugs rechnerisch über eine Koordinatentransformation gedreht. Eine mechanische Ausrichtung der Kameras findet im Allgemeinen nicht statt. Die geometrische Fahrachse des Fahrzeugs kann aus den Parametern der Fahrwerkgeometrie mit den dafür bekannten Messsystemen erfasst werden. Die geometrische Fahrachse ergibt sich als die Winkelhalbierende der Spurwinkel der (nicht gelenkten) Räder der Hinterachse eines Fahrzeugs.

Eine solche Vorgehensweise ist beschrieben in der DE 10 2009 001 742 A1. Dort ist eine Messanordnung beschrieben, mit der die geometrische Fahrachse des Fahrzeugs relativ zu einem Bezugskoordinatensystem ermittelt werden soll. Weiterhin wird ein Referenzbild mittels zwei Referenzkameras aufgenommen. Das Referenzbild wird ebenfalls mit der Kamera aufgenommen, die in dem Fahrzeug angebracht ist zur Verwendung in einem FAS-System.

In der US 2015 0 341 629 A1 ist eine vergleichbare Vorgehensweise beschrieben. Es wird die Position und Orientierung eines Fahrzeugs in einem Koordinatensystem bestimmt. Außerdem wird die Position eines definierten Targets in dem Koordinatensystem bestimmt. Mit der Kamera in dem Fahrzeug wird ein Bild aufgenommen, das auch dieses Target umfasst. Das Target wird in dem Bild vermessen. Aus diesem Bild und den Positionen und Orientierungen des Fahrzeugs sowie des Targets wird die Orientierung der Kamera relativ zur Orientierung des Fahrzeugs bestimmt.

Der vorliegenden Erfindung liegt die Aufgabe zu Grunde, ein Verfahren vorzuschlagen, um die Orientierung und Lage des Kamera-Koordinatensystems der wenigstens einen Kamera eines Fahrzeugs relativ zum Fahrzeug-Koordinatensystem zu bestimmen.

Diese Aufgabe wird gemäß Anspruch 1 gelöst durch ein Verfahren zur Bestimmung des Koordinatensystems wenigstens einer Kamera in einem Fahrzeug relativ zu einem Koordinatensystem des Fahrzeugs. Die Orientierung und die Position des Fahrzeug-Koordinatensystems werden bezogen auf das Prüfstands-Koordinatensystem erfasst. Alternativ ist es möglich, das Fahrzeug in eine definierte Position und Orientierung bezogen auf das Prüfstands-Koordinatensystem zu positionieren.

Gemäß einer ersten Alternative des Anspruchs 1 wird mittels wenigstens einer Referenzkamera, deren Koordinatensystem mit dem Prüfstands-Koordinatensystem identisch ist oder in definierter und bekannter Weise von diesem abweicht, ein Bild der Umgebung des Fahrzeugs in einem Erfassungsbereich einer Kamera eines in dem Prüfstand befindlichen Fahrzeugs als Referenzbild erfasst.

Das Verfahren nach Anspruch 1 enthält als zweite Alternative eine alternative Vorgehensweise, um ein Referenzbild zu erhalten. Hierbei wird eine Bilddarstellung in der Aufnahmerichtung wenigstens einer Kamera eines in dem Prüfstand befindlichen Fahrzeugs als Referenzbild dargestellt. Die Lage und Orientierung des Koordinatensystems der Bilddarstellung des Referenzbildes in Bezug zu dem Prüfstands-Koordinatensystem ist bekannt. Es wird hierbei ein Referenzbild abgeleitet aus den Bildpunkten, die als Grundlage der Bilddarstellung dienen - d. h. bspw. das Bild, das der Bilddarstellung eines Beamers oder Monitors zu Grunde liegt.

Bei dieser zweiten Alternative nach Anspruch 1 ist es vorteilhaft nicht notwendig, eine Referenzkamera vorzusehen. Allerdings muss in diesem Fall Orientierung und Lage des Koordinatensystems der Bilddarstellung in Bezug zum Prüfstands-Koordinatensystems bekannt sein. Das Referenzbild wird direkt aus der Bilddarstellung selbst abgeleitet. Hierbei erweist es sich als besonders vorteilhaft, wenn die Bilddarstellung mittels eines Beamers oder auf einem Bildschirm / einem Display erfolgt. Dem dargestellten Bild liegt dann ein bitmap zu Grunde, die als Referenzbild zu Grunde gelegt werden kann - ggf. noch unter Beachtung der Orientierung der Projektionsfläche des Beamers insbesondere auch unter Berücksichtigung der Projektionsrichtung des Beamers relativ zu dieser Projektionsfläche.

Weiterhin wird zu beiden Alternativen in dem Anspruch 1 in einer Auswertungseinrichtung das Referenzbild korreliert mit dem von der wenigstens einen Kamera des in dem Prüfstand befindlichen Fahrzeugs erfassten Bild, wobei bei der Korrelation das Referenzbild und / oder das von der wenigstens einen Kamera des in dem Prüfstand befindlichen Fahrzeugs erfasste Bild so umgerechnet werden, dass die Orientierung und Lage des Kamera-Koordinatensystems der wenigstens einen Kamera des in dem Prüfstand befindlichen Fahrzeugs zu der Orientierung und Lage des Referenzbildes bei der Umrechnung variiert werden bis sich ein Maximum der Korrelation einstellt oder bis ein Schwellwert der Korrelation überschritten ist.

Bei diesem Verfahren erweist es sich bei der ersten Alternative als vorteilhaft, dass keine Bilddarstellung mehr benötigt wird. Besonders vorteilhaft entfällt damit auch der technische Aufwand, die Muster in der Bilddarstellung mit der geforderten hohen Präzision aufzubringen und diese Bilddarstellung mit einer entsprechend hohen Präzision hinsichtlich der Position und Orientierung im Prüfstand zu positionieren. Diese hohe Präzision resultiert aus der Anforderung, die Orientierung des Kamera-Koordinatensystems der wenigstens einen Kamera des Fahrzeugs mit einer Genauigkeit im Bereich von Winkelminuten relativ zur Orientierung des Fahrzeug-Koordinatensystems bestimmen zu können. Daraus ergibt sich als Anforderung an die Maßhaltigkeit der Muster auf einer bedruckten Fläche eine Toleranz unter 0,1 mm, wenn - wie aus dem Stand der Technik bekannt - die Kanten der Muster vermessen werden, um daraus die Orientierung des Kamera-Koordinatensystems relativ zur Orientierung des Fahrzeug-Koordinatensystems zu ermitteln.

Durch die Anwendung bekannter Korrelationsverfahren, die z.B. bei der Überwachung von öffentlichen Bereichen zur Erkennung von Gesichtern und bei der Schildererkennung in modernen Fahrzeugen eingesetzt werden, zeigt sich, dass mit vertretbarem Rechen- und damit Zeitaufwand die Bestimmung der Orientierung und Lage des Kamera-Koordinatensystems relativ zum Prüfstands-Koordinatensystem und damit zum Koordinatensystem des Fahrzeugs (und damit auch relativ zur geometrischen Fahrachse des Fahrzeugs) durchgeführt werden kann.

Mit dem beschriebenen Verfahren der Korrelation kann die Orientierung und Lage des Kamera-Koordinatensystems der Kamera im Fahrzeug relativ zu dem dem Prüfstand zugeordneten Koordinatensystem ermittelt werden. Das Fahrzeug ist entweder definiert zu dem dem Prüfstand zugeordneten Koordinatensystem positioniert, oder die Orientierung und Lage des Fahrzeug-Koordinatensystems kann bezogen zu dem dem Prüfstand zugeordneten Koordinatensystem ermittelt werden.

Eine Definition des dem Prüfstand zugeordneten Koordinatensystems kann mittels einer sogenannten Kalibrierlehre erfolgen. Diese Kalibrierlehre weist die Parameter auf, die bei einem Fahrzeug zu vermessen sind. Dies betrifft in erster Linie die Parameter der Fahrwerkgeometrie. Die Orientierung dieser Kalibrierlehre im Prüfstand legt damit das dem Prüfstand zugeordnete Koordinatensystem fest, auf das dann bei allen Messungen bezuggenommen wird. Diese Erläuterung für die Definition des "dem Prüfstand zugeordneten Koordinatensystems" gilt nicht nur in Verbindung mit Anspruch 1, sondern kann generell als Möglichkeit der Definition des dem Prüfstand zugeordneten Koordinatensystems im Sinne dieser Patentanmeldung zu Grunde gelegt werden.

Eine andere Lösung nach der vorliegenden Erfindung besteht nach Anspruch 2 in einem Verfahren zur Bestimmung der Lage und Orientierung des Koordinatensystems wenigstens einer Kamera in einem Fahrzeug relativ zu einem Koordinatensystem des Fahrzeugs. Bei der Ausgestaltung nach Anspruch 2 wird eine Bilddarstellung in der Aufnahmerichtung wenigstens einer Kamera eines in einem Prüfstand befindlichen Fahrzeugs dargestellt. Die Orientierung und die Lage des Fahrzeug-Koordinatensystems werden bezogen auf ein dem Prüfstand zugeordnetes Koordinatensystem erfasst. Alternativ ist es möglich, das Fahrzeug in eine definierte Position und Orientierung des Fahrzeugs bezogen auf ein dem Prüfstand zugeordnetes Koordinatensystem zu positionieren. Nach der Erfindung gemäß Anspruch 2 wird mittels wenigstens einer Referenzkamera, deren Koordinatensystem mit dem Prüfstands-Koordinatensystem identisch ist oder in definierter und bekannter Weise von diesem abweicht, die Bilddarstellung in einem Referenzbild erfasst. In einer Auswertungseinrichtung wird die erfasste Bilddarstellung des Referenzbildes der wenigstens einen Referenzkamera korreliert mit dem von der wenigstens einen Kamera des in dem Prüfstand befindlichen Fahrzeugs erfassten Bild der Bilddarstellung. Bei der Korrelation wird das Referenzbild und / oder das von der wenigstens einen Kamera des in dem Prüfstand befindlichen Fahrzeugs erfasste Bild so umgerechnet, dass die Orientierung und Lage des Kamera-Koordinatensystems der wenigstens einen Kamera des in dem Prüfstand befindlichen Fahrzeugs zu der Orientierung und Lage des Koordinatensystems der Referenzkamera bei der Umrechnung variiert werden bis sich ein Maximum der Korrelation einstellt oder bis ein Schwellwert der Korrelation überschritten ist.

Bei der Ausgestaltung nach Anspruch 2 wird im Unterschied zur Ausgestaltung nach Anspruch 1 nicht die Umgebung des Fahrzeugs erfasst, sondern ein Bild in einer Bildebene dargestellt.

Bei dem Verfahren nach Anspruch 2 wird dieses Bild mit einer Referenzkamera aufgenommen, die definiert ausgerichtet ist auf das dem Prüfstand zugeordnete Koordinatensystem. Dieses von der Referenzkamera aufgenommene Bild wird als Referenzbild verwendet.

Bei der Ausgestaltung nach der ersten Alternative des Anspruchs 1 und bei der Ausgestaltung nach Anspruch 2 kann zur Festlegung des Koordinatensystems der Referenzkamera relativ zu dem dem Prüfstand mittels einer Kalibrierlehre zugeordneten Koordinatensystem die Referenzkamera an der Kalibrierlehre angebracht und zu dieser eingemessen sein. Mit dieser Referenzkamera wird das Referenzbild der Bilddarstellung aufgenommen und gespeichert. Bei nachfolgenden Bestimmungen der Lage und Orientierung des Kamera-Koordinatensystems wenigstens einer Kamera eines Fahrzeugs wird dieses gespeicherte Referenzbild verwendet und mit der Bildaufnahme der wenigstens einen Kamera des Fahrzeugs korreliert. Hierbei erweist es sich als vorteilhaft, wenn die Referenzkamera in ähnlicher Position - wenn möglich - positioniert ist wie die Kamera im Fahrzeug. Dabei muss die Bilddarstellung im Prüfstand reproduzierbar an derselben Position und mit derselben Orientierung erfolgen wie bei der Referenzaufnahme mit der Referenzkamera.

Alternativ hierzu kann bei der Ausgestaltung nach der ersten Alternative des Anspruchs 1 und bei der Ausgestaltung nach Anspruch 2 auch eine Referenzkamera in dem Prüfstand montiert sein und dort verbleiben. Die Orientierung und Lage des Koordinatensystems dieser Referenzkamera relativ zu dem dem Prüfstand zugeordneten Koordinatensystem kann wiederum mit einer weiteren Referenzkamera bzw. einer Bilddarstellung erfolgen. Diese kann beispielsweise auf der Kalibrierlehre angebracht sein. Voraussetzung dafür ist, dass die Kalibierlehre immer an exakt derselben Position im Prüfstand eingelegt werden muss. Die Lage und Orientierung des Koordinatensystems dieser in dem Prüfstand montierten Referenzkamera wird damit bezogen auf das dem Prüfstand zugeordnete Koordinatensystem kalibriert und damit festgelegt. Bei nachfolgenden Bestimmungen der Orientierung und Lage des Koordinatensystems der wenigstens einer Kamera eines Fahrzeugs wird als Referenzbild das in diesem Moment von der in dem Prüfstand montierten Referenzkamera aufgenommene Referenzbild verwendet und mit der Bildaufnahme der wenigstens einen Kamera des Fahrzeugs korreliert. Diese Vorgehensweise hat den Vorteil, dass die Bilddarstellung im Prüfstand lediglich in der Zeitspanne reproduzierbar an derselben Position und mit derselben Orientierung verbleiben muss, die zwischen der Aufnahme des Referenzbildes liegt und der Aufnahme des Bildes durch die wenigstens eine Kamera des Fahrzeugs. Insbesondere müssen die Position und Orientierung der Bildebene nicht identisch sein bei nacheinander zu prüfenden Fahrzeugen. Dies ermöglicht beispielsweise, die "Bildebene" (die ein Bildschirm, eine Projektionsfläche eines Beamers oder auch eine Bildfläche beispielsweise in Form einer bedruckten Leinwand oder einer bedruckten Platte sein kann), mit geringerer Lage- und Orientierungsgenauigkeit als dem momentanen Stand der Technik entsprechend nach Fahrzeugwechsel zu repositionieren. Ein FAS-Stand in der Fahrzeug Produktion wird dadurch in den technischen Anforderungen und der Konstruktion deutlich einfacher und damit im Ergebnis auch von den damit verbundenen Kosten günstiger.

Bei dem Verfahren nach Anspruch 2 zeigt sich vorteilhaft, dass die Struktur des Bildes insgesamt und insbesondere auch der Bildelemente des Bildes weitgehend beliebig sein kann. Insbesondere ist es nicht notwendig, zu definierten geometrischen Mustern des Bildes einzelne Kanten mit hoher Präzision zu vermessen und darzustellen wie dies beim bisherigen Stand der Technik der Fall ist.

Diese exakte Vermessung nach dem Stand der Technik wird dadurch vermieden, dass als Voraussetzung für das Korrelationsverfahrung zur Bestimmung der relativen Lage und Orientierung des Kamera- und Referenzkamera-Koordinatensystems das Bild- und das Referenzbild in gleicher Lage und Orientierung im dem Muster (Intensitätsverteilung) beliebig sein können, soweit diese identisch sind.

Bei der Ausgestaltung nach Anspruch 3 wird ein Referenzbild einer Referenzkamera gespeichert, wobei das gespeicherte Referenzbild bei nachfolgenden Bestimmungen der Hauptaufnahmerichtung wenigstens einer Kamera in einem Fahrzeug relativ zu einem Koordinatensystem des Fahrzeugs als Referenzbild verwendet wird.

Bei der Ausgestaltung nach Anspruch 4 wird eine in dem Prüfstand angebrachte Referenzkamera hinsichtlich ihrer Position und Orientierung auf das dem Prüfstand zugeordnete Koordinatensystem kalibriert. Das Referenzbild dieser Referenzkamera wird bei nachfolgenden Bestimmungen der Lage und Orientierung des Koordinatensystems wenigstens einer Kamera in einem Fahrzeug relativ zu einem Koordinatensystem des Fahrzeugs neu erfasst für jedes Fahrzeug, zu dem die Lage und Orientierung des Koordinatensystems wenigstens einer Kamera in einem Fahrzeug relativ zu einem Koordinatensystem des Fahrzeugs bestimmt werden soll.

Die Unterschiede und Vorteile dieser beiden Ausgestaltungen nach den Ansprüchen 3 und 4 wurden bereits im Zusammenhang mit Anspruch 2 erläutert.

Ein Ausführungsbeispiel der Erfindung ist in der Zeichnung dargestellt. Es zeigt dabei:
- Fig. 1:: eine Prinzipdarstellung der Bilddarstellung und der Erfassung der Bilddarstellung,
- Fig. 2:: eine alternative Möglichkeit der Realisierung der Bilddarstellung,
- Fig. 3:: eine alternative Möglichkeit, ein Referenzbild zu erhalten,
- Fig. 4:: ein Ausführungsbeispiel für die Durchführung einer Referenzaufnahme und
- Fig. 5:: ein weiteres Ausführungsbeispiel für die Durchführung einer Referenzaufnahme.

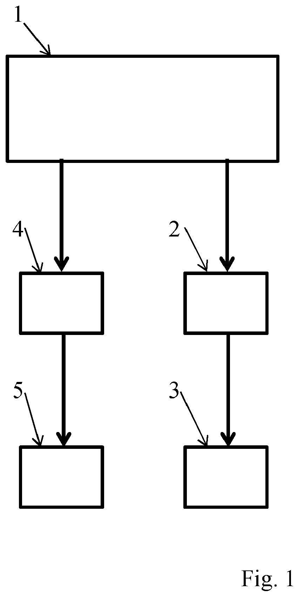

Figur 1 zeigt eine Prinzipdarstellung der Bilddarstellung und der Erfassung der Bilddarstellung mittels Kameras.

Die Bilddarstellung kann aus einem Muster bestehen, dass auf einem Träger 1 aufgebracht ist. Der Träger 1 kann ein Schirm oder eine Leinwand sein.

Anstelle der Verwendung eines Trägers kann auch die Umgebung vor dem Fahrzeug ausgewertet werden durch die Aufnahmen mittels Kameras.

Der Träger 1 kann ortsfest in dem Prüfstand angebracht sein oder auch beweglich. Durch eine Bewegung des Trägers 1 zur Seite oder nach oben (ggf. auch durch eine Bewegung nach unten) kann der Fahrweg eines in den Prüfstand ein- oder ausfahrenden Fahrzeugs freigegeben werden.

Die Bilddarstellung auf dem Träger 1 wird zum einen von wenigstens einer Kamera 2 eines Fahrzeugs erfasst, die Bestandteil eines FAS-Systems ist. Damit liegt eine von dieser wenigstens einen Kamera 2 erfasste Bilddarstellung 3 vor.

Weiterhin wird die Bilddarstellung auf dem Träger 1 noch von wenigstens einer Kamera 4 erfasst, die dem Prüfstand zugeordnet ist. Damit liegt ebenfalls eine von dieser wenigstens einen Kamera 4 erfasste Bilddarstellung als Referenzbild 5 vor.

Wie im Zusammenhang mit den Ansprüchen beschrieben, kann das Referenzbild 5 mittels einer Kamera 4 erfasst werden, die auf der Kalibrierlehre des Prüfstands angeordnet ist. Wenn nachfolgend die Orientierung der Bilddarstellung 1 im Prüfstand bei der Durchführung der Messung der Orientierung einer Kamera 2 eines Fahrzeugs mit ausreichender Genauigkeit mit der Orientierung bei der Aufnahme des Referenzbildes 5 übereinstimmt, kann die Bildaufnahme 3 der Kamera des Fahrzeugs mit dem gespeicherten Referenzbild 5 korreliert werden.

Die Genauigkeit kann erreicht werden, indem die Bilddarstellung ortsfest im Prüfstand angeordnet ist oder indem bei einer Bewegung der Bilddarstellung die Positionierung zur Durchführung einer Messung mit entsprechend großer Genauigkeit erfolgt.

Alternativ zu dieser Vorgehensweise kann auch eine Kamera 4 ortsfest im Prüfstand angebracht werden, wobei die Aufnahmerichtung dieser Kamera 4 relativ zum Koordinatensystem des Prüfstands bestimmt wird. Bei dieser Ausgestaltung wird das Referenzbild 5 für jedes zu prüfende Fahrzeug erneut aufgenommen. Die von der Kamera 2 des zu prüfenden Fahrzeugs erfasste Bilddarstellung 3 wird dann mit diesem jeweils neu aufgenommenen Referenzbild 5 korreliert.

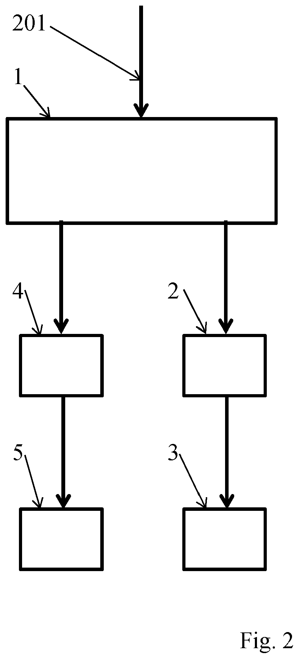

In der Darstellung der Figur 2 ist eine alternative Möglichkeit dargestellt für die Realisierung der Bilddarstellung. Entsprechend der Darstellung der Figur 2 kann die Bilddarstellung realisiert werden, indem ein Bild auf den Träger 1 projiziert wird. Diese Projektion ist mittels des Pfeils 201 dargestellt.

Anstelle dieser Projektion auf den Träger 1 kann der Träger 1 auch durch einen Bildschirm ersetzt werden, auf dem die Bilddarstellung dargestellt wird.

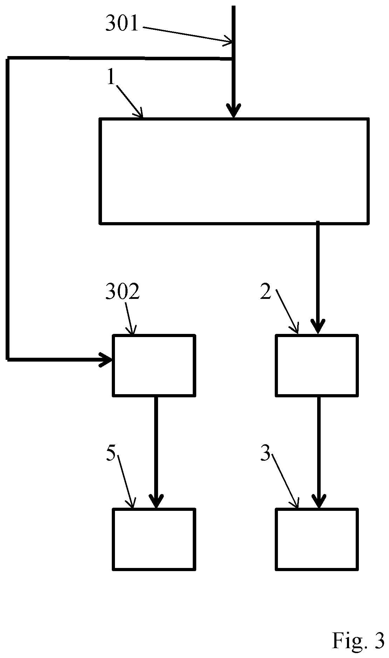

Figur 3 zeigt eine weitere Abwandlung, bei der jedoch das Referenzbild nicht mit einer Kamera aufgenommen wird. Es ist zu sehen, dass von dem Pfeil 301 abgezweigt wird zu einer Auswertungseinheit 302. In dieser Auswertungseinheit 302 wird aus der bitmap des dargestellten Bildes eine Referenzaufnahme 5 abgeleitet, die mit dem von der Kamera 2 aufgenommenen Bild 3 korreliert wird.

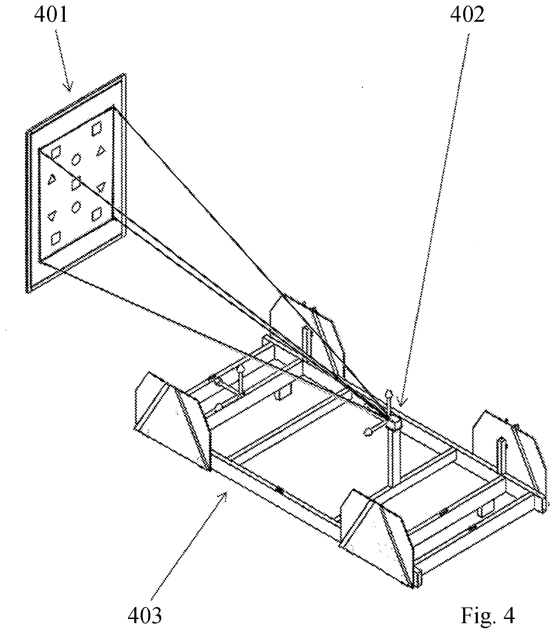

Figur 4 zeigt ein Ausführungsbeispiel für die Durchführung einer Referenzaufnahme. Es ist eine Bilddarstellung 401 zu sehen, die mit einer Referenzkamera 402 erfasst wird. Diese Referenzkamera 402 ist auf einer Kalibrierlehre 403 des Prüfstands angebracht. Das Koordinatensystem dieser Referenzkamera 402 ist damit dem Koordinatensystem der Kalibrierlehre 403 zugeordnet. Im einfachsten Fall stimmen die Richtungen der Vektoren überein, die die Koordinatensysteme aufspannen. Der Ursprung des Koordinatensystems der Referenzkamera 402 ist versetzt gegenüber dem Ursprung des Koordinatensystems der Kalibrierlehre 403.

Sofern sich die Bilddarstellung 401 für nachfolgende Messungen hinsichtlich Orientierung und Lage reproduzierbar in derselben Position befindet wie bei der Durchführung der Referenzaufnahme, kann die gespeicherte Referenzaufnahme als Referenzdarstellung für nachfolgende Messungen verwendet werden.

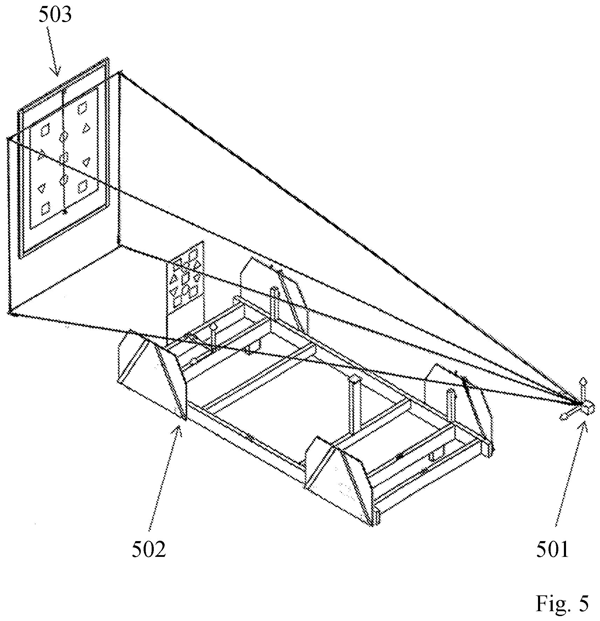

Figur 5 zeigt ein weiteres Ausführungsbeispiel für die Durchführung einer Referenzaufnahme. Es ist eine Referenzkamera 501 ortsfest im Prüfstand montiert. Das Koordinatensystem dieser Referenzkamera 501 kann hinsichtlich der Orientierung und Lage ermittelt werden, indem mit der Referenzkamera 501 eine Referenzdarstellung erfasst wird, die mit definierter Orientierung und Lage an der Kalibrierlehre 502 des Prüfstands angebracht ist. Die Orientierung und Lage des Koordinatensystems der Referenzkamera 501 kann ermittelt werden, indem die Aufnahme der an der Kalibrierlehre angebrachten Referenzdarstellung mit einer bitmap dieser Referenzdarstellung korreliert wird. Damit ist das Koordinatensystem dieser Referenzkamera 501 hinsichtlich Orientierung und Lage bezogen auf das Koordinatensystem der Kalibrierlehre bekannt.

Bei nachfolgenden Messungen kann eine Bilddarstellung 503 mit der Referenzkamera 501 erfasst werden, um daraus ein Referenzbild zu erzeugen. Dieses Referenzbild kann mit einer Bildaufnahme einer FAS-Kamera eines Fahrzeugs korreliert werden, die dieselbe Bilddarstellung 503 erfasst.

Die in dem Prüfstand ortsfest montierte Referenzkamera 501 kann auch hinsichtlich der Lage und Orientierung von deren Koordinatensystem kalibriert werden unter Verwendung einer Anordnung nach Figur 4. Hierzu wird von der Referenzkamera 402 auf der Kalibrierlehre 403 die Bilddarstellung 401 erfasst. Wenn von der ortsfesten Referenzkamera 501 dieselbe Bilddarstellung 401 erfasst wird, kann die Orientierung und Lage des Koordinatensystems der Referenzkamera 501 mittels der Orientierung und Lage des Koordinatensystems der Referenzkamera 402 erfasst werden, indem die aufgenommenen Bilder so umgerechnet werden, dass die Korrelation maximal wird.

## Patentansprüche

1. Verfahren zur Bestimmung der Orientierung und Lage des Koordinatensystems wenigstens einer Kamera (2) in einem Fahrzeug relativ zu einem Koordinatensystem des Fahrzeugs,
• wobei die Orientierung und die Position des Koordinatensystems des Fahrzeugs bezogen auf ein einem Prüfstand zugeordnetes Koordinatensystem erfasst werden, oder
• wobei das Fahrzeug so positioniert wird, dass die Orientierung und die Position des Fahrzeug-Koordinatensystems in Bezug zu dem dem Prüfstand zugeordneten Koordinatensystem definiert ist,
➢ wobei in einer ersten Alternative mittels wenigstens einer Referenzkamera (4, 402, 501), deren Koordinatensystem eine Orientierung und Lage aufweist, die zur Orientierung und Lage des Prüfstands-Koordinatensystems identisch ist oder in definierter und bekannter Weise hiervon abweicht, ein Bild der Umgebung des Fahrzeugs in einem Erfassungsbereich einer Kamera (2) des in dem Prüfstand befindlichen Fahrzeugs als Referenzbild (5) erfasst wird, oder
➢ wobei in einer zweiten Alternative als Alternative zur ersten Alternative ein Referenzbild (302, 5) ermittelt wird,
➢ indem in der zweiten Alternative eine Bilddarstellung (1) als Projektion eines Beamers oder als Darstellung auf einem Bildschirm oder einem Display in der Aufnahmerichtung wenigstens einer Kamera (2) des in dem Prüfstand befindlichen Fahrzeugs dargestellt wird (301),
➢ wobei in der zweiten Alternative die Orientierung und die Lage des Koordinatensystems der Bilddarstellung (1) relativ zu dem Prüfstands-Koordinatensystem bekannt ist, und
➢ wobei in der zweiten Alternative das Referenzbild (5) ermittelt wird durch ein Bitmap, das dem dargestellten Bild zu Grunde liegt,
➢ wobei bei Verwendung eines Beamers die Orientierung der Projektionsfläche des Beamers unter Berücksichtigung der Projektionsrichtung des Beamers relativ zu dieser Projektionsfläche beachtet wird,
wobei sowohl in der ersten Alternative als auch in der zweiten Alternative
➢ in einer Auswertungseinrichtung das Referenzbild (302, 5) korreliert wird mit dem von der wenigstens einen Kamera (2) des in dem Prüfstand befindlichen Fahrzeugs erfassten Bild (3),
➢ indem bei der Korrelation das Referenzbild (302, 5) und / oder das von der wenigstens einen Kamera (2) des in dem Prüfstand befindlichen Fahrzeugs erfasste Bild (3) so umgerechnet werden, dass die Orientierung und Lage des Kamera-Koordinatensystems der wenigstens einen Kamera (2) des in dem Prüfstand befindlichen Fahrzeugs zu der Orientierung und Lage des Referenzbildes (302, 5) bei der Umrechnung variiert werden bis sich ein Maximum der Korrelation einstellt oder bis ein Schwellwert der Korrelation überschritten ist.

2. Verfahren nach der ersten Alternative des Anspruchs 1,
**dadurch gekennzeichnet,**
**dass** eine Bilddarstellung (1) in der Aufnahmerichtung der wenigstens einen Kamera (2) des in dem Prüfstand befindlichen Fahrzeugs dargestellt wird und dass mittels der wenigstens einen Referenzkamera (4, 402, 501) die Bilddarstellung in dem Referenzbild (5) erfasst wird.

3. Verfahren nach der ersten Alternative des Anspruchs 1 oder nach Anspruch 2, **dadurch gekennzeichnet, dass** das Referenzbild (5) der Referenzkamera (4, 402) gespeichert wird, wobei das gespeicherte Referenzbild (5) bei nachfolgenden Bestimmungen der Orientierung und Lage des Koordinatensystems wenigstens einer Kamera (2) in einem Fahrzeug relativ zu einem Koordinatensystem des Fahrzeugs als Referenzbild (5) verwendet wird.

4. Verfahren nach der ersten Alternative des Anspruchs 1 oder nach einem der Ansprüche 2 oder 3,
**dadurch gekennzeichnet, dass** die wenigstens eine in dem Prüfstand angebrachte Referenzkamera (501) hinsichtlich der Orientierung und Lage ihres Koordinatensystems relativ zu dem dem Prüfstand zugeordneten Koordinatensystem kalibriert wird, wobei das Referenzbild (5) dieser Referenzkamera (501) bei nachfolgenden Bestimmungen der Orientierung und Lage des Koordinatensystems wenigstens einer Kamera (2) in einem Fahrzeug relativ zu einem Koordinatensystem des Fahrzeugs neu erfasst wird für jedes Fahrzeug, zu dem die Orientierung und Lage des Koordinatensystems der wenigstens einen Kamera (2) in einem Fahrzeug relativ zu dem Koordinatensystem des Fahrzeugs bestimmt werden soll.

## Claims

1. Method for determining the orientation and position of the coordinate system of at least one camera (2) in a vehicle relative to a coordinate system of the vehicle,
• wherein the orientation and the position of the coordinate system of the vehicle are detected relative to a coordinate system associated with a test bench, or
• wherein the vehicle is positioned such that the orientation and position of the vehicle coordinate system is defined with respect to the coordinate system associated with the test stand,
➢ wherein, in a first alternative, by means of at least one reference camera (4, 402, 501), the coordinate system of which has an orientation and position which is identical to the orientation and position of the test bench coordinate system or deviates therefrom in a defined and known manner, an image of the environment of the vehicle is captured in a detection range of a camera (2) of the vehicle located in the test bench as a reference image (5), or
➢ wherein in a second alternative a reference image (302, 5) is determined as an alternative to the first alternative,
➢ in that, in the second alternative, an image representation (1) is presented (301) as a projection of a beamer or as a representation on a screen or a display in the recording direction of at least one camera (2) of the vehicle located in the test bench,
➢ wherein in the second alternative the orientation and the position of the coordinate system of the image representation (1) relative to the test bench coordinate system is known, and
➢ wherein in the second alternative the reference image (5) is determined by a bitmap which underlies the displayed image,
➢ wherein, when using a beamer, the orientation of the projection surface of the beamer is observed, taking into account the direction of projection of the beamer relative to this projection surface,
wherein in the first alternative as well as in the second alternative
➢ in an evaluation device, the reference image (302, 5) is correlated with the image (3) captured by the at least one camera (2) of the vehicle located in the test bench,
➢ by converting the reference image (302, 5) and/or the image (3) captured by the at least one camera (2) of the vehicle located in the test bench during the correlation in such a way that the orientation and position of the camera coordinate system of the at least one camera (2) of the vehicle located in the test bench are varied in relation to the orientation and position of the reference image (302, 5) during the conversion until a maximum of the correlation occurs or until a threshold value of the correlation is exceeded.

2. Method according to the first alternative of claim 1,
**characterised in**
**that** an image representation (1) is represented in the recording direction of the at least one camera (2) of the vehicle located in the test bench, and
**that** the image representation in the reference image (5) is recorded by means of the at least one reference camera (4, 402, 501).

3. Method according to the first alternative of claim 1 or according to claim 2, **characterised in that** the reference image (5) of the reference camera (4, 402) is stored, the stored reference image (5) being used as reference image (5) in subsequent determinations of the orientation and position of the coordinate system of at least one camera (2) in a vehicle relative to a coordinate system of the vehicle.

4. Method according to the first alternative of claim 1 or according to one of claims 2 or 3,
**characterised in that** the at least one reference camera (501) mounted in the test bench is calibrated with respect to the orientation and position of its coordinate system relative to the coordinate system associated with the test bench, the reference image (5) of this reference camera (501) being reacquired in subsequent determinations of the orientation and position of the coordinate system of at least one camera (2) in a vehicle relative to a coordinate system of the vehicle for each vehicle for which the orientation and position of the coordinate system of the at least one camera (2) in a vehicle is to be determined relative to the coordinate system of the vehicle.

## Revendications

1. Procédé pour déterminer l'orientation et la position du système de coordonnées d'au moins une caméra (2) dans un véhicule par rapport à un système de coordonnées du véhicule,
• l'orientation et la position du système de coordonnées du véhicule étant saisies par rapport à un système de coordonnées associé à un banc d'essai, ou
• le véhicule étant positionné de telle sorte que l'orientation et la position du système de coordonnées du véhicule soient définies par rapport au système de coordonnées associé au banc d'essai,
➢ procédé dans lequel, dans une première alternative, une image de l'environnement du véhicule est saisie comme image de référence (5) dans une zone de détection d'une caméra (2) du véhicule se trouvant dans le banc d'essai au moyen d'au moins une caméra de référence (4, 402, 501) dont le système de coordonnées présente une orientation et une position qui sont identiques à l'orientation et à la position du système de coordonnées du banc d'essai ou qui s'en écartent d'une manière définie et connue, ou
➢ procédé dans lequel, dans une deuxième alternative qui est une alternative à la première alternative, une image de référence (302, 5) est déterminée
➢ en représentant (301) dans la deuxième alternative une représentation d'image (1) sous forme de projection d'un projecteur ou sous forme de représentation sur un écran ou un affichage dans la direction de prise de vue d'au moins une caméra (2) du véhicule se trouvant dans le banc d'essai,
➢ l'orientation et la position du système de coordonnées de la représentation d'image (1) par rapport au système de coordonnées du banc d'essai étant connues dans la deuxième alternative, et
➢ l'image de référence (5) étant déterminée dans la deuxième alternative par un bitmap qui est à la base de l'image représentée,
➢ l'orientation de la surface de projection du projecteur étant prise en compte lors de l'utilisation d'un projecteur en tenant compte de la direction de projection du projecteur par rapport à cette surface de projection,
sachant qu'aussi bien dans la première alternative que dans la deuxième alternative
➢ l'image de référence (302, 5) est corrélée avec l'image (3) saisie par ladite au moins une caméra (2) du véhicule se trouvant dans le banc d'essai,
➢ l'image de référence (302, 5) et/ou l'image (3) saisie par ladite au moins une caméra (2) du véhicule se trouvant dans le banc d'essai étant converties, lors de la corrélation, de telle sorte, que l'orientation et la position du système de coordonnées de la caméra de ladite au moins une caméra (2) du véhicule se trouvant dans le banc d'essai par rapport à l'orientation et à la position de l'image de référence (302, 5) sont modifiées lors de la conversion jusqu'à ce qu'un maximum de la corrélation s'établisse ou jusqu'à ce qu'une valeur seuil de la corrélation soit dépassée.

2. Procédé selon la première alternative de la revendication 1, **caractérisé en ce qu'**une représentation d'image (1) est représentée dans la direction de prise de vue de ladite au moins une caméra (2) du véhicule se trouvant dans le banc d'essai, et **en ce que** la représentation d'image est saisie dans l'image de référence (5) au moyen de ladite au moins une caméra de référence (4, 402, 501).

3. Procédé selon la première alternative de la revendication 1 ou selon la revendication 2, **caractérisé en ce que** l'image de référence (5) de la caméra de référence (4, 402) est enregistrée, l'image de référence (5) enregistrée étant utilisée comme image de référence (5) lors de déterminations ultérieures de l'orientation et de la position du système de coordonnées d'au moins une caméra (2) dans un véhicule par rapport à un système de coordonnées du véhicule.

4. Procédé selon la première alternative de la revendication 1 ou selon l'une des revendications 2 ou 3, **caractérisé en ce que** ladite au moins une caméra de référence (501) montée dans le banc d'essai est calibrée en ce qui concerne l'orientation et la position de son système de coordonnées par rapport au système de coordonnées associé au banc d'essai, l'image de référence (5) de cette caméra de référence (501) étant à nouveau saisie lors de déterminations ultérieures de l'orientation et de la position du système de coordonnées d'au moins une caméra (2) dans un véhicule par rapport à un système de coordonnées du véhicule, et ce pour chaque véhicule pour lequel l'orientation et la position du système de coordonnées de ladite au moins une caméra (2) dans un véhicule par rapport au système de coordonnées du véhicule doivent être déterminées,.
